# EUROPÄISCHE PATENTSCHRIFT

(11) **EP 2 582 997 B1**
(45) Veröffentlichungstag und Bekanntmachung des Hinweises auf die Patenterteilung: **20.01.2016**
(21) Anmeldenummer: 11724656.1
(22) Anmeldetag: 14.06.2011
(51) Int. Cl.: F16D 65/14, F16D 65/56

(54) **SCHEIBENBREMSE IN HYDRAULISCHER SELBSTVERSTÄRKENDER BAUART MIT NACHSTELLEINRICHTUNG**
DISC BRAKE OF HYDRAULIC SELF-ENERGIZING DESIGN WITH ADJUSTING DEVICE
FREIN À DISQUE DU TYPE À AUTO-RENFORCEMENT HYDRAULIQUE PRÉSENTANT UN DISPOSITIF DE RATTRAPAGE

(30) Priorität: 17.06.2010 DE 102010024076
(43) Veröffentlichungstag der Anmeldung: 24.04.2013
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(74) Vertreter: Mattusch, Gundula
(86) Internationale Anmeldenummer: PCT/EP2011/059822
(87) Internationale Veröffentlichungsnummer: WO 2011/157697

(56) Entgegenhaltungen:
- WO-A1-2007/045430
- DE-A1-102006 057 442
- DE-B3-102008 061 347

## Beschreibung

Die Erfindung betrifft eine Scheibenbremse in hydraulischer selbstverstärkender Bauart mit Nachstelleinrichtung, wie z.B. aus DE-A-10 2006 057 442 bekannt.

Eine Scheibenbremse mit elektromotorischem Aktuator in selbstverstärkender Bauart und bremseninterner Hydraulikanordnung ist in der Anmeldeschrift WO 2007/045430 A1 der Anmelderin beschrieben.

Eine Nachstelleinrichtung einer derartigen Scheibenbremse ist mit einem relativ hohen Teileaufwand verbunden.

Die Aufgabe der vorliegenden Erfindung besteht darin, eine Nachstelleinrichtung einer gattungsgemäßen Scheibenbremse zu verbessern.

Damit kann eine Verschleißnachstellung realisiert werden, welche den Aufbau einer kompakten Scheibenbremse mit geringerer Teilezahl als im Stand der Technik ermöglicht.

Erfindungsgemäß wird diese Aufgabe mit den Merkmalen des Anspruchs 1 gelöst.

Die Scheibenbremse ist mit einer Nachstelleinrichtung zur Nachstellung eines Bremsbelagverschleißes versehen, wobei die Nachstelleinrichtung eine verstellbare Schraubspindel aufweist, die in Wirkverbindung mit der Zuspannvorrichtung zur Nachführung des zumindest einen Bremsbelages dient. Dabei ist die Schraubspindel in besonders platzsparender Weise in den zumindest einen Zuspannzylinder integriert. Sie ist außerdem mit dem elektromotorischen Aktuator zum Antrieb koppelbar, und weist einen Nachstellkolben auf, der in dem Tangentialkraftaufnahmezylinder bei Nachführung des zumindest einen Bremsbelages hydraulisch verstellbar ist.

So ist auch in einfacher Weise eine Funktionssicherheit einer Keilwinkelumschaltung und Druckverstärkung ermöglicht.

Eine Scheibenbremse in selbstverstärkender Bauart umfasst Folgendes: eine bremseninterne Hydraulikanordnung mit einem Vorratskreis und einem Ausdehnungsgefäß; eine Zuspannvorrichtung mit zumindest einem Zuspannzylinder zum Zuspannen zumindest eines Bremsbelages in Richtung einer Bremsscheibe; zumindest eine Kraftübertragungseinheit, welche den zumindest einen Bremsbelag unter einem Keilwinkel an der Zuspannvorrichtung abstützt; zumindest einen Tangentialkraftaufnahmezylinder zur Keilwinkelumschaltung, der einen Aufnahmestufenkolben aufweist und mit der zumindest einen Kraftübertragungseinheit in

Wirkungsverbindung steht; einen elektromotorischen Aktuator, welcher auf die Zuspannvorrichtung über die Hydraulikanordnung einwirkt; einen Verteilerzylinder zur Druckverstärkung, der einen Stufenkolben aufweist und zwischen dem elektromotorischen Aktuator und der Zuspannvorrichtung in Reihe angeordnet ist; und eine Steuereinheit, welche zur Steuerung der Keilwinkelumschaltung zwischen dem Tangentialkraftaufnahmezylinder und dem elektromotorischen Aktuator vorgesehen ist, wobei die Scheibenbremse eine Nachstelleinrichtung zur Nachstellung eines Bremsbelagverschleißes umfasst, wobei die Nachstelleinrichtung eine verstellbare Schraubspindel, die in Wirkverbindung mit der Zuspannvorrichtung zur Nachführung des zumindest einen Bremsbelages steht und mit dem elektromotorischen Aktuator zum Antrieb koppelbar ist, und einen Nachstellkolben aufweist, der in dem Aufnahmestufenkolben des Tangentialkraftaufnahmezylinder bei Nachführung des zumindest einen Bremsbelages hydraulisch verstellbar ist.

Somit ist es möglich, ebenfalls in platzsparender Weise ein Nachstellantriebsrad mit einem mit der Schraubspindel gekoppelten Wellenantriebsrad als einen hydraulischen Zahnradmotor auszulegen, welcher mit dem elektromotorische Aktuator hydraulisch über einen Hydraulikschalter koppelbar ist. Vorzugsweise ist der Hydraulikschalter von der Steuereinheit steuerbar.

Ein großer Vorteil besteht darin, dass der Antrieb der Nachstelleinrichtung hydraulisch erfolgt. Der Zahnradmotor kann flach ausgebildet sein und die Hydraulikleitungen können in das Gehäuse integriert werden.

Auf diese Weise kann es auch ermöglicht werden, dass der Nachstellkolben zur Nachführung mit dem Vorratskreis über ein Richtungsventil verbindbar ist.

In einer bevorzugten Ausführung ist vorgesehen, dass das Ausdehnungsgefäß des Vorratskreises der bremseninternen Hydraulikanordnung zur Erfassung eines Belagverschleißes mit einem Geber ausgerüstet ist, wobei der Geber mit einem Bremssteuergerät in Verbindung steht, welches zur Aktivierung der Nachstelleinrichtung für eine entsprechende Nachführung des zumindest einen Bremsbelages zumindest mit dem elektromotorischen Aktuator und der Steuereinheit gekoppelt ist. Ein solches Bremssteuergerät ist bereits bei einer derartigen Bremse vorhanden und kann auf einfache Weise mit entsprechender Software nachgerüstet werden. Natürlich ist auch ein Zusatzgerät möglich. Dieser Geber des Flüssigkeitsspiegels im Ausdehnungsbehälter kann als Wegsensor somit zur Messung der Horizontalverstellung der Bremsbeläge, der Erkennung eines Hydraulikflüssigkeitsverlustes und zur Statuserfassung eines Bremsbelagverschleißes vorteilhaft verwendet werden. Anstelle eines Wegsensors kann als kostengünstige Alternative auch ein Drucksensor verwendet werden, um die aktuelle Ölmenge im Ausdehnungsgefäß zu erfassen.

Die Steuereinheit kann in einer bevorzugten Ausführung eine Steuerscheibe aufweisen, welche von dem elektromotorischen Aktuator über ein Umschaltventil hydraulisch von einem Steuerantrieb in Ausbildung als hydraulischer Zahnradmotor antreibbar ist. Auf diese Art ist es möglich, dass der elektromotorische Aktuator als Antrieb für unterschiedliche Aufgaben durch einfache Steuermittel verwendet werden kann. Er wirkt hier als Antriebsquelle für die Nachstelleinrichtung und die Steuereinrichtung zusätzlich zu seiner Funktion als Druckerzeuger für die Zuspannvorrichtung.

Die Nachstelleinrichtung kann mit einer Notlöseeinrichtung versehen sein, welche vorzugsweise mit dem Nachstellantriebsrad gekoppelt ist. Damit ist nicht nur im Notfall ein manuelles Lösen der Bremse möglich, sondern auch eine Rückstellung der Zuspannvorrichtung zum Beispiel bei einem Belagwechsel.

Die Dachführung der Bremsbeläge bei Verschleiß kann nach einer bestimmten Anzahl von Bremsungen erfolgen. Im einfachsten Fall erfolgt dieses Nachstellen am Ende einer jeden Betätigung der Feststellbremse, da hierbei das Lüftspiel zwischen mechanischem Anschlag des Schraubenspindelrads am Zylinderboden und dem Berührpunkt der Bremsbeläge mit der Scheibe ohnehin neu eingestellt werden muss.

Im normalen ungebremsten Fahrbetrieb kann die Nachstelleinrichtung für eine intelligente Nachführung bei Verschleiß der Bremsbeläge (und auch der Bremsscheibe) alternativ mit zumindest einem Geber ausgerüstet sein. Dieser kann einen Nachstellweg zur Ermittlung einer aktuellen Nachführung erfassen und an das Bremssteuergerät zur Regelung der Nachstelleinrichtung übermitteln. Das Bremssteuergerät kann in üblicher Weise diesen aktuellen Weg mit einem Vergleichswert vergleichen, der zum Beispiel in einer Tabelle gespeichert ist, und so den Bremsbelag immer mit seinem erforderlichen Lüftspiel einstellen.

Dazu kann der Geber zur Ermittlung eines Nachstellwegs ein Mehrgangpotentiometer sein, welches mit der Schraubspindel direkt oder indirekt gekoppelt ist. Derartige Winkelgeber sind in unterschiedlicher Ausführung für viele Zwecke in hoher Qualität auch für hohe Temperaturen, wie sie in einer Bremse auftreten können, verfügbar.

Nachfolgend wird die Erfindung anhand der in den schematischen Figuren der Zeichnung angegebenen Ausführungsbeispiele näher erläutert. Es zeigt dabei:
- Fig. 1: eine schematische Darstellung eines ersten Ausführungsbeispiels einer erfindungsgemäßen Scheibenbremse;
- Fig. 2: eine schematische Teilschnittdarstellung eines zweiten Ausführungsbeispiels der erfindungsgemäßen Scheibenbremse in einer Normalstellung;
- Fig. 3: eine schematische Teilschnittdarstellung des zweiten Ausführungsbeispiels nach Fig. 2 in einer maximalen Bremszustellung;
- Fig. 4: eine schematische Teilschnittdarstellung des zweiten Ausführungsbeispiels nach Fig. 2 in einer Normalstellung mit maximalem Verschleiß;
- Fig. 5: eine schematische Perspektivansicht des zweiten Ausführungsbeispiels nach Fig. 2; und
- Fig. 6: eine schematische Perspektivansicht eines Ausschnitts aus Fig. 5;

Bauteile mit gleicher oder ähnlicher Funktion sind mit gleichen Bezugszeichen versehen, sofern nicht anders angegeben.

Mit dem Begriff "Öl" ist hier Hydraulikflüssigkeit gemeint.

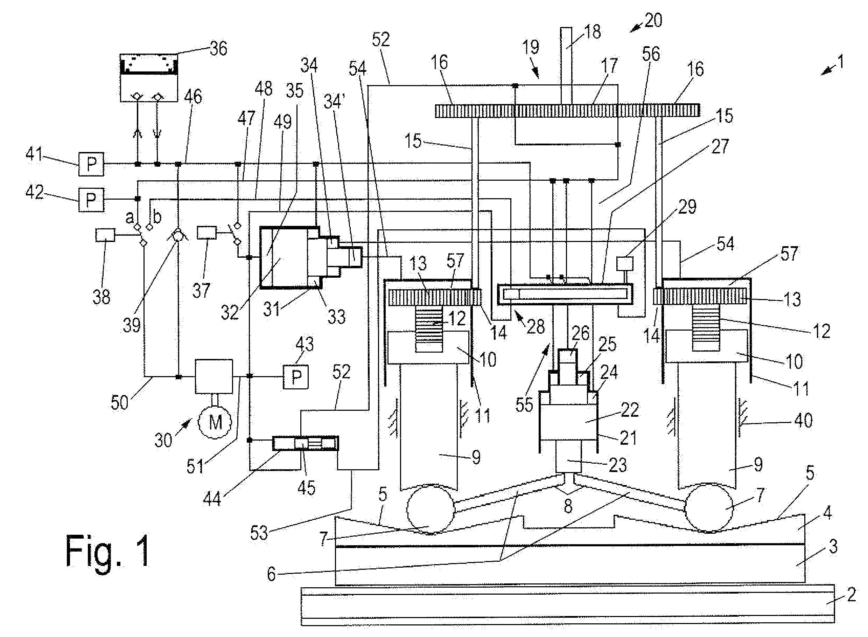

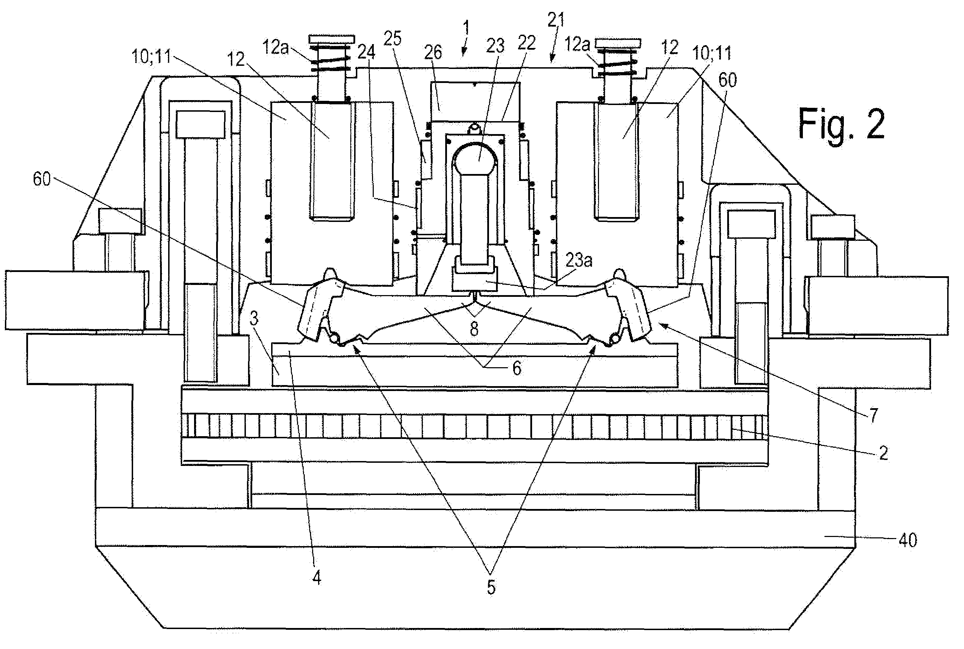

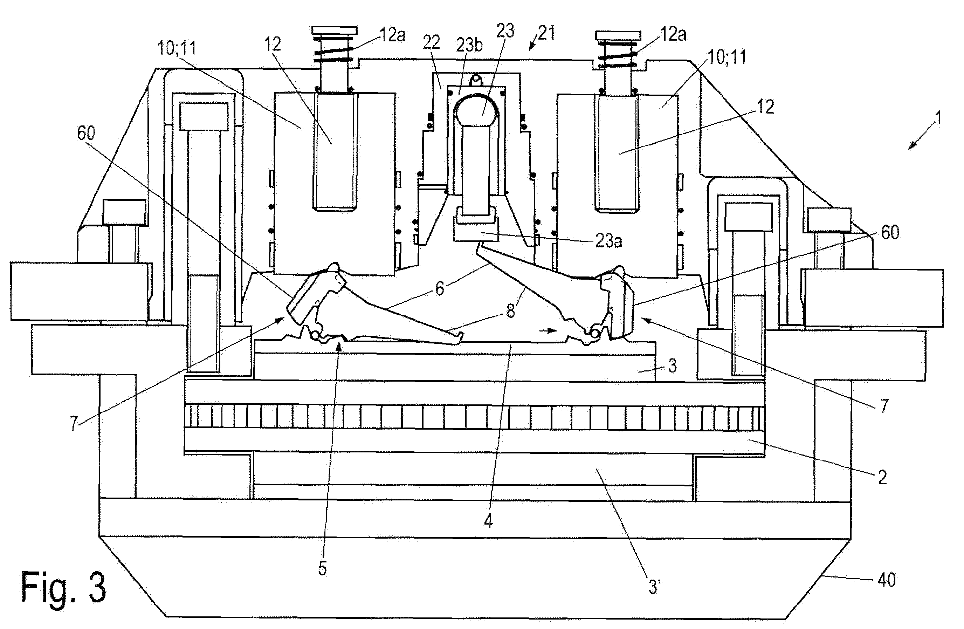

Fig. 1 ist eine schematische Darstellung eines ersten Ausführungsbeispiels einer erfindungsgemäßen Scheibenbremse 1. Fig. 1 wird im Zusammenhang mit Fig. 2 und Fig. 3 beschrieben. Fig. 2 zeigt eine schematische Teilschnittdarstellung eines zweiten Ausfühningsbeispiels der erfindungsgemäßen Scheibenbremse in einer Normalstellung; und Fig. 3 illustriert eine schematische Teilschnittdarstellung des zweiten Ausfühningsbeispiels nach Fig. 2 in einer maximalen Bremszustellung.

Die Scheibenbremse 1 weist einen Bremssattel 40 auf, welcher eine Bremsscheibe 2 übergreift. Beiderseits der Bremsscheibe 2 ist jeweils ein Bremsbelag 3, 3' mit Bremsbelagträger 4 angeordnet, wobei der in Fig. 2 unten gezeigte Bremsbelag 3' (nicht in Fig. 1 dargestellt) am Bremssattel 40 anliegt und der andere Bremsbelag 3 mit einer Zuspannvorrichtung in Wirkverbindung steht. Die Achse der Bremsscheibe 2 ist nicht gezeigt und verläuft, wie leicht vorstellbar ist, vertikal nach oben unterhalb der Bildebene. Eine Vorwärtsbewegung eines Fahrzeugs, welchem die Scheibenbremse 1 zugeordnet ist, soll in den Fig. 1 bis 3 nach links verlaufen, wobei sich die Bremsscheibe 2 dann nach links dreht.

Der Belagträger 4 ist hier mit zwei keilförmigen Auflagereinrichtungen 5 ausgebildet, wobei sie unter einem Keilwinkel an der Zuspannvorrichtung abgestützt sind, mit welcher sie jeweils über eine Kraftübertragungseinheit 7 mit jeweils einem Zuspannelement 9 in Wirkverbindung stehen. Die Zuspannelemente 9 sind an ihrem oberen Ende jeweils mit einem Zuspannkolben 10 eines Zuspannzylinders 11 verbunden. Die Zuspannzylinder 11 sind so nebeneinander angeordnet, dass eine gleichmäßige Anpressung der Bremsbeläge 3, 3' an die Bremsscheibe 2 beim Zuspannen erfolgen kann.

In die Zuspannkolben 10 ist jeweils in Längsrichtung eine Schraubspindel 12 mit Gewinde eingeschraubt. Die Schraubspindeln 12 sind an ihren oberen Enden jeweils mit einem Schraubspindelrad 13 versehen, wobei jedes Schraubspindelrad 13 mit einem Nachstellritzel 14 in Eingriff steht. Die Nachstellritzel 14 sind jeweils über Nachstellwellen 15 mit Nachstellwellenrädern 16 drehfest verbunden, welche gemeinsam mit einem Nachstellantriebsrad 17 in Eingriff sind. Das Nachstellantriebsrad 17 ist zum Beispiel als hydraulisch betriebenen Zahnradmotor 19 ausgebildet und hier mit einer Notlöseeinrichtung 18 ausgerüstet, welche zur Betätigung des Nachstellantriebsrads 17 zum Beispiel mittels eines Werkzeugs verstellbar ist. Die Nachstellräder 13, 14, 16 und 17 weisen zum Beispiel Verzahnungen auf und werden zur Verschleißnachstellung der Bremsbeläge 3, 3' verwendet, was weiter unten noch näher erläutert wird. Die Nachstellräder 13, 14, 16 und 17, die Notlöseeinrichtung 18, die Nachstellwellen 15 und der Zahnradmotor 19 bilden zusammen mit den Schraubspindeln 12 eine Nachstelleinrichtung 20 der Scheibenbremse 1.

Rückholfedern 12a sind jeweils zwischen Bremssattel 40 und Schraubspindeln 12 in Längsrichtung der Schraubspindeln 12 angeordnet und ziehen den Bremsbelag 3, 3' von der Bremsscheibe 2 in der in Fig. 2 gezeigte Normalstellung auf ein bestimmtes so genanntes Lüftspiel zurück. Weitere Federn (nicht dargestellt) sind zum Zusammenhalten von Zuspannkolben 10 und Bremsbelag 3 vorgesehen.

Die Kraftübertragungseinheiten 7 weisen jeweils einen Umlenkhebel 6 auf, wobei sich die Umlenkhebel 6 gegenüberstehen und Druckabschnitte 8 mit einem Stößel 23 eines Tangentialkraftaufnahmezylinders 21 in Wirkverbindung stehen. Der Stößel 23 ist hier Teil eines Aufnahmestufenkolbens 22, der mit dem Tangentialkraftaufnahmezylinder 21 erste bis dritte Druckkammern 24, 25 und 26 festlegt.

Die Druckkammern 24, 25 und 26 sind jeweils über Zwischenleitungen 55 an eine Steuereinheit 27 angeschlossen, welche Bestandteil eines Hydrauliksystems der Scheibenbremse 1 ist. Dieses Hydrauliksystem wird nun anhand der Fig. 1 näher erläutert.

Ein elektromotorischer Aktuator 30, zum Beispiel ein Elektromotor mit einer Zahnradpumpe, ist über eine Pumpensaugleitung 50 mit einem Ansaugventil 39, zum Beispiel ein Richtungsventil, an einen Vorratskreis 46 angeschlossen. Der Vorratskreis 46 steht einerseits mit einem Ausdehnungsgefäß 36 und einem ersten Drucksensor 41 in hydraulischer Verbindung. Andererseits ist der Vorratskreis 46 über ein Löseventil 37 mit einer Pumpendmckleitung 51 des elektromotorischen Aktuators 30 verbindbar. Weiterhin ist der Vorratskreis 46 an die Steuereinheit 27 und eine Vordruckkammer 33 eines Verteilerzylinders 31 angeschlossen.

Der Vorratskreis 46 ist zum Beispiel mit einem Vorratsdruck von ca. 1 bis 4 bar beaufschlagt. Ein Drucksensor 41 misst die wegabhängige Druckänderung infolge der Federsteifigket einer oberhalb eines Kolbens angebrachten Druckfeder. Der Kolben sollte hierbei eine geringe Gleit- und Haftreibung besitzen. Durch Erfassen der wegrichtungsabhängigen Drucksignalhysterese kann die Gleitreibung erfasst und mit Hilfe einer Ausweresoftware im Steuergerät weitgehend kompensiert werden.

Der elektromotorische Aktuator 30 steht außerdem über die Pumpendruckleitung 51 mit einer Eingangsdruckkammer 35 des Verteilerzylinders 31 und einem Hydraulikschalter 44 in Verbindung. An die Pumpendruckleitung 51 schließt sich ferner eine Steuerantriebsdruckleitung 49 an, welche zu einem Steuerantrieb 28 der Steuereinheit 27 führt. Eine Steuerantriebsrückleitung 48 ist zwischen dem Steuerantrieb 28 und einer Stellung b eines Umschaltventils 38 angeschlossen. Eine hier geschlossene Stellung a des Umschaltventils 38 verbindet die Pumpenansaugleitung 50 mit einem Zwischenkreis 47, welcher sowohl an der Steuereinheit 27 über Verbindungsleitungen 56 angeschlossen ist. Ferner ist der Zwischenkreis 47 mit dem Zahnradmotor 19 der Nachstelleinrichtung 20 verbunden, wobei eine Zahnradmotordruckleitung 52 den Zahnradmotor 19 druckseitig mit dem Hydraulikschalter 44 verbindet. Der Hydraulikschalter 44 ist außerdem über eine Hydraulikschalter-Steuerleitung 53 mit der Steuereinheit 27 verbunden.

Die Steuereinheit 27 ist zum Beispiel eine tellerförmige verdrehbare Steuerscheibe mit Steuerbohrungen, welche unterschiedliche Funktionen der Scheibenbremse 1 in unterschiedlichen Betriebszuständen übernehmen und Steueraufgaben ausführen. Diese Steuerscheibe ist zum Beispiel mit einem hydraulischen Zahnradmotor als Steuerantrieb 28 gekoppelt. Die Steuerscheibe steht außerdem mit einem Steuermelder 29 in Wirkverbindung. Ein übergeordnetes, z. B. elektronisches Bremssteuergerät (nicht gezeigt) steuert und regelt die Bremsvorgänge und -zustände der Scheibenbremse 1. Dazu steuert es die Ventile 37 und 38, welche z. B. Elektromagnetventile sind, und den elektromotorischen Aktuator 30. Das Steuergerät kommuniziert auch mit dem ersten Drucksensor 41 sowie mit weiteren Drucksensoren, von denen ein zweiter Drucksensor 42 einen Druck im Zwischenkreis 46 ermittelt. Ein dritter Drucksensor 43 dient zur Druckermittlung eines Drucks in der Pumpendnickleitung 51, wobei dieser Druck bis zu 130 bar betragen kann.

Der Verteilerzylinder 31 weist einen Stufenkolben 32 zur Druckverstärkung, Synchronisation und gleichmäßigen Beaufschlagung der Zuspannzylinder 11 mit einem Zuspanndruck von bis ca. 250 bar auf. Dazu bildet der Stufenkolben 32 mit dem Zuspannzylinder 11 Hockdruckkammern 34, 34', welche jeweils über eine Hochdruckleitung 54 mit den Zuspannzylindern 11 in Verbindung stehen.

Die Scheibenbremse 1 ist eine hydraulische selbstverstärkende Scheibenbremse, deren Funktion nun erläutert wird.

Bei einem Bremsbeginn wird mittels des elektromotorischen Aktuators 30 über das Ansaugventil 39 Hydraulikflüssigkeit aus dem Vorratskreis 46 und dem Ausdehnungsgefäß 36 angesaugt. Dabei erhöht der elektromotorische Aktuator 30 den Druck in der Pumpendruckleitung 51, wodurch der Stufenkolben 32 des Verteilerzylinders 31 verstellt wird und die Zuspannzylinder 11 mit Druck beaufschlagt. Somit werden die Bremsbeläge 3, 3' gegen die Bremsscheibe 2 gedrückt, bis ein Selbstverstärkungsprozess eingeleitet ist.

Dabei verschiebt sich der Bremsbelag 3 aufgrund von Reibung in Fig. 3 nach links gegen einen Anschlag des Bremssattels 40. Die linke Kraftübertragungseinheit 7 als Umlenkhebel 6 wird nach unten und die rechte Kraftübertragungseinheit 7 als weiterer Umlenkhebel 6 nach oben geschwenkt. Die Umlenkhebel 6 werden durch die so erzeugte Tangentialkraft verschwenkt. Der rechte Umlenkhebel 6 lenkt die Tangentialkraft in eine Vertikalkraft um, welche über seinen Druckabschnitt 8 auf den Stößel 23 des Tangentialkraftaufnahmezylinders 21 übertragen wird. Dabei dient eine Druckplatte 23a zur gleichmäßigen und reibungsfreien Kraftübertragung. Weitere Bremskräfte werden über die Kraftübertragungseinheit 7, hier diejenige auf der rechten Seite, über die Zuspannzylinder 11 in den Bremssattel 40 eingeleitet. Auf der linken Seite überträgt der Umlenkhebel 6 mit seinem zwischen dem Zuspannelement 9 und der Auflagereinrichtung 5 angeordneten Abschnitt die Zuspannkraft des linken Zuspannzylinders 11. Auf der rechten Seite übernimmt die Übertragung der Zuspannkraft des rechten Zuspannzylinders 11 ein Schulterelement 60 der rechten Kraftübertragungseinheit 7. Fährt das nicht gezeigte Fahrzeug rückwärts, kehrt sich der oben beschrieben Vorgang um, wie leicht zu verstehen ist, und der linke Umlenkhebel 6 überträgt die Tangentialkraft auf den Tangentialkraftaufnahmezylinder 21.

In Ruheposition des Verteilerkolbens 32 (In Zeichnung Linksanschlag) sind die beiden Hochdruckkammern 34, 34'mit der Vordruckkammer 33 verbunden. Dadurch können die beiden Zuspannkolben 10 in ihrer Ruheposition (auf Anschlag zurückgezogen) hydraulisch neu abgeglichen werden. Gleichzeitig dient dies der Rückführung von überschüssigem Öl aus den Zuspannzylindern 11 während dem Belagwechsel, wenn die Zuspannkolben 10 wieder ganz zurückgefahren werden.

Die Steuerscheibe der Steuereinheit 27 wird dabei über den Steuerantrieb 28 so eingestellt, dass die Druckkammern 24, 25 und 26 des Tangentialkraftaufnahmezylinders 21 in 7 unterschiedlichen Kombinationen entweder mit dem Vorratskreis 46 und/oder mit dem Zwischenkreis 47, welcher über das Umschaltventil 38 mit der Pumpenansaugleitung 50 verbunden ist, verbindbar sind. Damit kann die Scheibenbremse 1 an einen momentanen Reibwert angepasst werden. Verschiedene, so genannte Keilwinkel, sind einstellbar. Messwerte zur Ermittlung des momentanen Reibwertes liefern die Drucksensoren 41, 42, 43 und weitere Parameter, z. B. aus einer Fahrzeugsteuerung. Der Tangentialkraftaufnahmezylinder 21 liefert somit einen Druck der zur Verstärkung des Drucks in der Pumpendnickleitung 50 über den Verteilerzylinder 31 auf die Zuspannzylinder 11 wirkt und die Pumpenleistung des elektromotorischen Aktuators 30 verringert. Der Verteilerzylinder 31 kann zusammen mit den beiden Zuspannzylindern 11 deren Zustellbewegung synchronisieren, einen Schrägverschleiß der Bremsbeläge 3, 3' ausgleichen und ein Druckniveau zwischen dem Tangentialaufnahmezylinder 21 und dem Verteilerzylinder 31 im Zwischenkreis 46 senken. Dabei dient der Verteilerzylinder 31 als Druckverstärker für die Zuspannzylinder 11.

Am Ende des Bremsvorgangs wird der elektromotorische Aktuator 30 ausgeschaltet und das Löseventil 37 eingeschaltet. Dadurch wird der Druck in der Pumpendnickleitung 51 abgebaut, wobei die Rückholfedern 12a bei nachlassendem Zuspanndruck in den Zuspannzylindern 11 den Bremsbelag 3 wieder in seine Normalstellung mit Lüftspiel zurückführen.

Das Löseventil 37 kann auch als Notlöseventil im Fehlerfall zur Lösung der Scheibenbremse 1 verwendet werden. Es ist zum Beispiel ein Magnetventil, welches stromlos offen ist.

Das Ausdehnungsgefäß 36 dient außerdem zur Aufnahme der Volumina der mit dem Vorratskreis 46 über die Steuereinheit 27 verbundenen Druckkammern 24, 25, 26 des Tangentialkraftaufnahmezylinders 21. Das Ausdehnungsgefäß 36 weist ferner Sensoren zur Ermittlung eines Hydraulikflüssigkeitsverlustes auf. Damit kann auch der Belagverschleiß der Bremsbeläge 3, 3' gemessen werden.

Bei einem so erfassten Verschleiß wird bei einem bestimmten Verschleißwert vom Bremssteuergerät das Umschaltventil 38 in Stellung b umgeschaltet und der elektromotorische Aktuator 30 eingeschaltet. Dabei ist die Steuerantriebsrückleitung 48 mit der Pumpensaugleitung 50 verbunden und der hydraulische Zahnradmotor 28 der Steuereinheit 27 verstellt die Steuerscheibe derart, dass über die Hydraulikschalter-Steuerleitung 53 ein Schieber 45 des Hydraulikschalters 44, zum Beispiel durch den an ihm anstehenden Druck der mit ihm verbundenen Pumpendruckleitung 51, in eine Öffnungsstellung verschoben wird. Diese Öffnungsstellung des Schiebers 45 verbindet dann die Pumpendruckleitung 51 mit der Zahnradmotordruckleitung 52 und beaufschlagt den Zahnradmotor 19 der Nachstelleinrichtung 20 mit diesem Druck. Das Nachstellantriebsrad 17 verdreht somit die Schraubspindeln 12 über die Zahnräder 16, 14, 13, wodurch die Zuspannelemente 9 der Zuspannzylinder 11 in Richtung auf die Bremsscheibe 2 verstellt werden und den ermittelten Verschleißweg des Bremsbelags 3 bzw. 3' nachstellen, bis das Lüftspiel des Normalzustands wieder hergestellt ist. Zur genauen Messung dieses Nachstellwegs können unterschiedliche Geber dienen, zum Beispiel Winkelgeber am Zahnradmotor 19. Dies kann zum Beispiel ein Mehrgangpotenziometer sein, dessen elektrischer Widerstand sich über einen Verdrehwinkel, der proportional zum Nachstellweg ist, proportional zum Nachstellweg verändert und somit ein Maß für den Nachstellweg bildet.

Der Nachstellvorgang wird, wenn das normale Lüftspiel erreicht ist, beendet, indem über das Umschaltventil 38 der Steuerantrieb 28 zur Ausschaltung des Hydraulikschalters 44 über die Hydraulikschalter-Steuerleitung 53 betätigt wird, wodurch der Zahnradmotor 19 ausgeschaltet wird, und dann der elektromotorische Aktuator 30 ausgestellt wird.

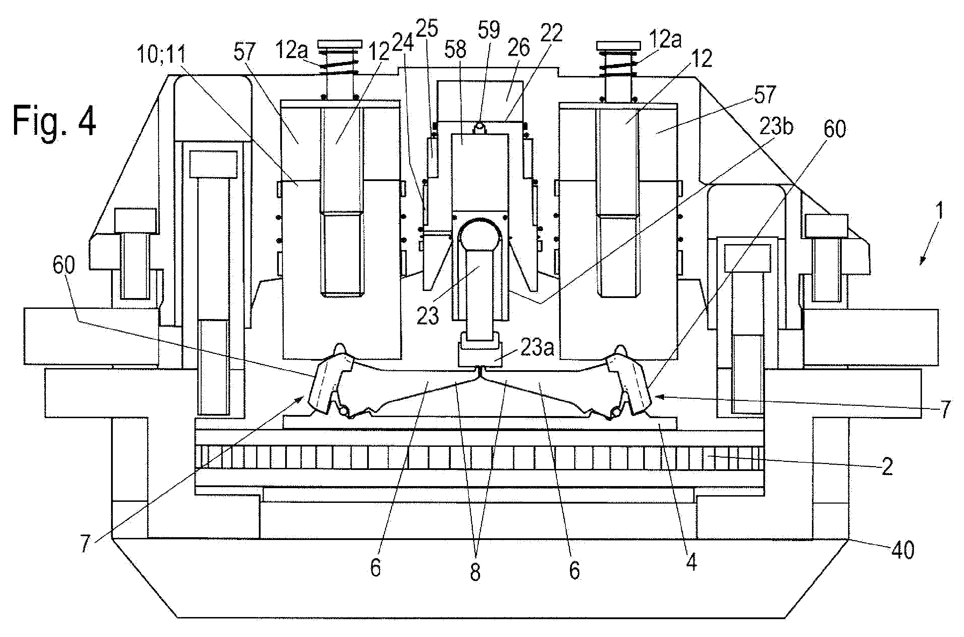

Fig. 4 zeigt eine schematische Teilschnittdarstellung des zweiten Ausführungsbeispiels nach Fig. 2 in einer Normalstellung mit maximalem Verschleiß der Bremsbeläge 3, 3'. Es ist deutlich zu sehen, dass die Zuspannkolben 10 in den Zuspannzylindern 11 durch die heraus geschraubten Schraubspindeln 12 nach unten in Richtung Bremsscheibe 2 verstellt sind. Dabei sind Zuspanndruckkammern 57 der Zuspannzylinder 11 mit Hydraulikflüssigkeit nachträglich angefüllt, um den Nachstellweg auszugleichen. Dies kann durch den Vorratskreis 46 erfolgen. Außerdem hat die Verschleißnachstellung des Bremsbelages 3 zur Folge, dass die Umlenkhebel 6 mit ihren Druckabschnitten 8 ebenfalls um den Nachstellweg verstellt sind. Ohne einen Ausgleich dieses Nachstellwegs würde eine Funktion des Tangentialkraftaufnahmezylinders 21 nicht über den gesamten Nachstellweg möglich sein. Dazu ist der Aufnahmestufenkolben 22 des Tangentialkraftaufnahmezylinders 21 mit einem Nachstellkolben 23b versehen, welcher zwischen dem Stößel 23 und dem Aufnahmestufenkolben 22 in diesem koaxial verschiebbar angeordnet ist. Dieser Nachstellkolben 23b befindet sich in dem Aufnahmestufenkolben 22 und bildet mit diesem eine Nachstellkammer 58 welche über ein Richtungsventil 59 mit der dritten Druckkammer 26 des Tangentialkraftaufnahmezylinders 21 kommuniziert.

Die Nachstellung des Nachstellkolbens 23b verläuft ebenfalls über den Vorratskreis 46, indem über die Steuereinheit 27 die Druckkammern 24 bis 26 vom Vorratskreis 46 aufgefüllt werden. Dabei füllt sich auch die Nachstellkammer 58 über das Richtungsventil 59. Der Druck im Vorratskreis 46 muss hierzu ausreichend sein. Dieser Druck kann aber auch über zusätzliche Dnickerhöhungsmaßnahmen mittels des elektromotorischen Aktuators 30 über zusätzliche Ventile und Regelungen erhöht werden, wobei der Nachstellweg des Nachstellkolbens 23b über geeignete Geber erfasst werden kann. Wird nun über den Stößel 23 beim Bremsvorgang Kraft auf den Nachstellkolben 23b eingeleitet, so kann die Hydraulikflüssigkeit in der Nachstellkammer 58 aufgrund des Richtungsventils 59 nicht entweichen. Bei einem Belagwechsel und Rückstellung der Nachstelleinrichtung 20 wird die Nachstellkammer 58 ebenfalls entleert, was zum Beispiel durch Öffnen des Richtungsventils 59 oder mittels eines Stifts, der zentrisch im Boden der Druckkammer 26 platziert ist, erfolgen kann. Dies wird im Folgenden erläutert.

Eine Nachstellung des Belagverschleißes erfolgt jeweils nach dem Lösen der Feststellbremse bzw. Parkbremse. Der Arbeitsraum der Zylinder des Aufnahmestufenkolbens 22, das heißt die Druckkammern 24, 25 und 26, ermöglicht einen etwas größeren Bewegungsweg als die Umlenkhebel 6 in ihrer maximalen Auslenkung dies erfordern. Damit kann sich der Nachstellkolben 23b automatisch einregeln. Zum Ausfahren des Kolbens 23b wird zusätzliches Öl durch das Richtungsventil 59 als Rückflussverhinderer in den Zylinderraum (Nachstellkammer 58) oberhalb des Nachstellkolbens 23b eingelassen. Dies geschieht, wenn mittels Spindeln 12 die Zuspannkolben 10 nach Ende der Park- bzw. Handbremsenbetätigung weiter in Richtung Bremsscheibe 2 verstellt wurden (wegen Belagverschleiß). Der Aufnahmestufenkolben 22 gelangt dadurch an seinen äußeren Bewegungsanschlag. Der hydraulische Druck im Nachstellkolben 23b, das heißt in der Nachstellkammer 58, sinkt ab, so dass sich das Richtungsventil 59 öffnet und Öl in die Nachstellkammer 58 einfließt.

Das umgekehrte Einfahren des Nachstellkolbens 23b erfolgt beim Wechsel der Bremsbeläge 3, 3' und/oder der Bremsscheibe 2. Dazu werden die Spindeln 12 durch den Zahnradmotor 19 hydraulisch derart betätigt, dass die Zuspannkolben 10 eingefahren werden. Damit wird auch der Aufnahmestufenkolben 22 eingefahren. Das Hydrauliköl oberhalb der Zuspannkolben 10 sowie des Aufnahmestufenkolbens 22 wird in das Ausdehnungsgefäß 36 gedrückt. Der Aufnahmestufenkolben 22 wird dabei soweit zurückgefahren, bis dessen Kolbenbodenfläche den Zylinderraumboden der dritten Druckkammer 26 berührt. Kurz vor diesem Berührpunkt drückt ein Stift (nicht dargestellt, aber leicht vorstellbar), welcher zentrisch im Boden der dritten Druckkammer 26 platziert ist, auf das Richtungsventil 59, so dass sich dieses öffnet und das in der Nachstellkammer 58 befindliche Öl über die dritte Druckkammer 26 in das Ausdehnungsgefäß 36 gedrückt wird. Damit entsteht auf einfache Art eine Lageregelung für den Aufnahmestufenkolben 22, so dass dieser trotz gelegentlicher Belagverschleißnachstellung dem Bewegungsablauf der Umlenkhebel 6 folgen kann, ohne durch seine mechanischen Anschläge behindert zu werden.

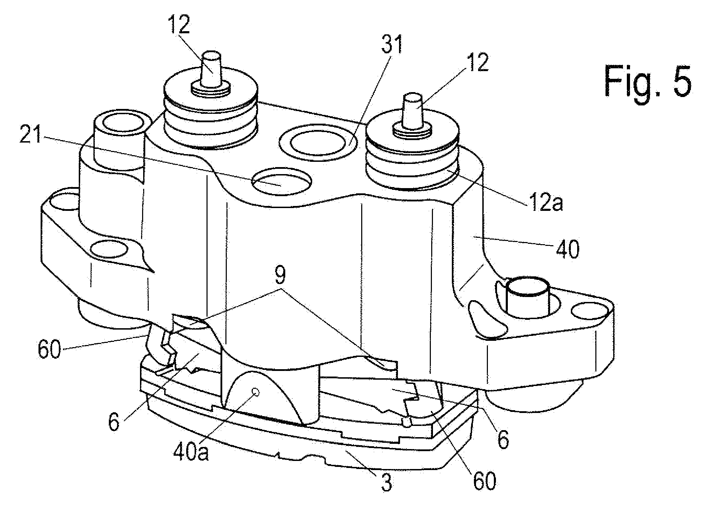

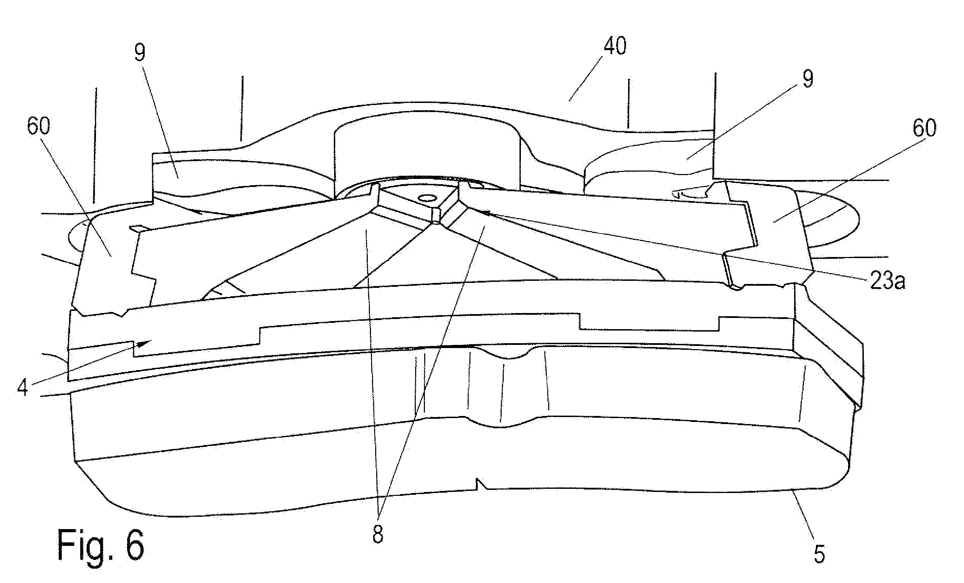

In Fig. 5 ist eine schematische Perspektivansicht des zweiten Ausführungsbeispiels nach Fig. 2 gezeigt; und Fig. 6 ist eine schematische Perspektivansicht eines Ausschnitts aus Fig. 5.

Fig. 5 zeigt einen Abschnitt des Bremssattels 40, in welchem hier alle Hydraulikkomponenten angeordnet sind. Zwischen den Zuspannzylindern 11, von denen hier die oberen Enden der Schraubspindeln 12 mit den Rückholfedern 12a zu sehen sind, sind der Tangentialkraftaufnahmezylinder 21 und der Verteilerzylinder 31 hintereinander angeordnet, wobei diese Zylinder 11,21 und 13 im Wesentlichen alle parallel zueinander liegen. Im unteren Bereich, den Fig. 6 in einer anderen Perspektive darstellt, ist ein Anschlagelement 40a zwischen Bremssattel 40 und Belagträger 4 unterhalb des Tangentialkraftaufnahmezylinders 21 angeordnet. Neben dem Anschlagelement 40a kann auf der Inneneseite auch eine Feder zum Zusammenhalten von Zuspannkolben 10 und Bremsbelag 3 platziert werden. Der Bremsbelag 3 ist entsprechend der Bremsscheibe 2 kreisbogenförmig, wobei die Umlenkhebel 6 mit den Schulterelementen 60 zwischen Kolbenelementen 9 und der Auflagereinrichtung 5 angeordnet sind und die Druckabschnitten 8 radial nach außen weisen und an der Druckplatte 23a anliegen.

Die erfindungsgemäße Scheibenbremse 1 weist somit folgende Eigenschaften und Vorteile auf:
- Hohe Energie- und Kraftdichte (180 kN Zustellkraft im Bauraum darstellbar)
- Automatische Selbstverstärkung in beide Fahrtrichtungen
- Einfache und zuverlässige Notlösefunktion durch stromlos offenes Magnetventil (Löseventil 37)
- Elektromotorischer Antrieb
- Kraftübertragung hydraulisch mittels Brems- bzw. Hydraulikflüssigkeit
- Hydraulikkomponenten sind zuverlässige und bekannte Standardtechnologie
- Kürzerer Bremsweg durch bessere ABS-Regelung (geringe zu beschleunigende Massen)
- Kurze Ansprech- und Verstellzeit (geringe zu beschleunigende Massen)
- Intelligente Verschleißnachstellung für rückseitige Beläge ohne zusätzlichen Motor
- Geringe elektrische Ansteuerleistung (zum Beispiel ca. 60 W bis max. 150 W)
- Preisgünstige Zahnradpumpe anstelle teurem mechanischen Hochlastgetriebe
- Ein Elektromotor treibt über Zahnradpumpe
   - Bremszustellung
   - Steuereinheit (Ventilscheibe)
   - Nachstelleinrichtung (Belagverschleiß)
   - Parkbremse
- Einfache und präzise Kraftmessung mittels Drucksensoren
- Kompakte, leichte Bauweise, wenig empfindlich gegenüber Vibrationen
- Gute Gleit- und Schmiereigenschaften der Komponenten durch Verwendung von Öl
- Robuste Regelung, da spielfrei, keine mechanischen Zahnradpaarungen zur Bremskraftübertragung
- Zum Beispiel ermöglicht eine vierstufige Umschaltung 16 verschiedene Keilwinkel
- Direkte Messung der Zuspannkraft sowie der Bremskraft möglich
- Genaue Messung bzw. Erfassung des Anlegepunkts/Reibepunkts der Bremsbeläge durch Differenzdruckmessung
- Messung des Belagverschleißes ohne zusätzliche Verschleißwegsensoren

Obwohl die vorliegende Erfindung vorstehend anhand bevorzugter Ausführungsbeispiele beschrieben wurde, ist sie darauf nicht beschränkt, sondern auf vielfältige Art und Weise modifizierbar.

Der Tangentialkraftaufnahmezylinder 21 kann mehr oder weniger Druckkammern 24 bis 26 aufweisen.

Die Steuereinheit 27 kann anstelle einer Steuerscheibe oder zusätzlich zu ihr auch Magnetventile aufweisen.

### Bezugszeichenliste

- 1: Scheibenbremse
- 2: Bremsscheibe
- 3, 3': Bremsbelag
- 4: Belagträger
- 5: Auflagereinrichtung
- 6: Umlenkhebel
- 7: Kraftübertragungseinheit
- 8: Druckabschnitt
- 9: Zuspannelement
- 10: Zuspannkolben
- 11: Zuspannzylinder
- 12: Schraubspindel
- 12a: Rückholfeder
- 13: Schraubspindelrad
- 14: Nachstellritzel
- 15: Nachstellwelle
- 16: Nachstellwellenrad
- 17: Nachstellantriebsrad
- 18: Notlöseeinrichtung
- 19: Zahnradmotor
- 20: Nachstelleinrichtung
- 21: Tangentialkraftaufnahmezylinder
- 22: Aufnahmestufenkolben
- 23: Stößel
- 23a: Druckplatte
- 23b: Nachstellkolben
- 24: Erste Druckkammer
- 25: Zweite Druckkammer
- 26: Dritte Druckkammer
- 27: Steuereinheit
- 28: Steuerantrieb
- 29: Steuermelder
- 30: Pumpe
- 31: Verteilerzylinder
- 32: Stufenkolben
- 33: Vordruckkammer
- 34, 34': Hochdruckkammer
- 35: Eingangsdruckkammer
- 36: Ausdehnungsgefäß
- 37: Löseventil
- 38: Umschaltventil
- 39: Ansaugventil
- 40: Bremssattel
- 40a: Anschlagelement
- 41: Erster Drucksensor
- 42: Zweiter Drucksensor
- 43: Dritter Drucksensor
- 44: Hydraulikschalter
- 45: Schieber
- 46: Vorratskreis
- 47: Zwischenkreis
- 48: Steuerantriebsrückleitung
- 49: Steuerantriebsdruckleitung
- 50: Pumpensaugleitung
- 51: Pumpendruckleitung
- 52: Zahnradmotordruckleitung
- 53: Hydraulikschalter-Steuerleitung
- 54: Hochdruckleitung
- 55: Zwischenleitungen
- 56: Verbindungsleitungen
- 57: Zuspanndruckkammer
- 58: Nachstellkammer
- 59: Richtungsventil
- 60: Schulterelement

## Patentansprüche

1. Scheibenbremse (1) in selbstverstärkender Bauart, mit:
a) einer bremseninternen Hydraulikanordnung mit einem Vorratskreis (46) und einem Ausdehnungsgefäß (36);
b) einer Zuspannvorrichtung mit zumindest einem Zuspannzylinder (11) zum Zuspannen zumindest eines Bremsbelages (3, 3') in Richtung einer Bremsscheibe (2);
c) zumindest einer Kraftübertragungseinheit (7), welche den zumindest einen Bremsbelag (3, 3') unter einem Keilwinkel an der Zuspannvorrichtung abstützt;
d) zumindest einem Tangentialkraftaufnahmezylinder (21) zur Keilwinkelumschaltung, der einen Aufnahmestufenkolben (22) aufweist und mit der zumindest einen Kraftübertragungseinheit (7) in Wirkungsverbindung steht;
e) einem elektromotorischen Aktuator (30), welcher auf die Zuspannvorrichtung über die Hydraulikanordnung einwirkt;
f) einem Verteilerzylinder (31) zur Druckverstärkung, der einen Stufenkolben (32) aufweist und zwischen dem elektromotorischen Aktuator (30) und der Zuspannvorrichtung in Reihe angeordnet ist; und
g) einer Steuereinheit (27), welche zur Steuerung der Keilwinkelumschaltung zwischen dem Tangentialkraftaufnahmezylinder (21) und dem elektromotorischen Aktuator (30) vorgesehen ist,
h) wobei die Scheibenbremse (1) eine Nachstelleinrichtung (20) zur Nachstellung eines Bremsbelagverschleißes umfasst, wobei die Nachstelleinrichtung (20) eine verstellbare Schraubspindel (12), die in Wirkverbindung mit der Zuspannvorrichtung zur Nachführung des zumindest einen Bremsbelages (3, 3') steht und mit dem elektromotorischen Aktuator (30) zum Antrieb koppelbar ist,
**dadurch gekennzeichnet**,
i) dass die Nachstelleinrichtung (20) einen Nachstellkolben (23b) aufweist, der in dem Aufnahmestufenkolben (22) des Tangentialkraftaufnahmezylinders (21) bei Nachführung des zumindest einen Bremsbelages (3, 3') hydraulisch verstellbar ist.

2. Scheibenbremse (1) nach Anspruch 1, **dadurch gekennzeichnet, dass** ein Nachstellantriebsrad (17) mit einem mit der Schraubspindel (12) gekoppelten Wellenantriebsrad (16) einen hydraulischen Zahnradmotor (19) bildet, welcher mit dem elektromotorische Aktuator (30) hydraulisch über einen Hydraulikschalter (44) koppelbar ist.

3. Scheibenbremse (1) nach Anspruch 1, **dadurch gekennzeichnet, dass** bei Verwendung von 2 Zuspannzylindern (11) der hydraulischen Zahnradmotor (19) sich aus einem mittig platzierten Wellenantriebsrad (16) sowie zwei beidseitig platzierten Wellenantriebsrädern (16) besteht und dass diese Anordnung gleichzeitig zur synchronen Verstellung der Zuspannylinder (11) dient.

4. Scheibenbremse (1) nach Anspruch 2, **dadurch gekennzeichnet, dass** der Hydraulikschalter (44) von der Steuereinheit (27) steuerbar ist.

5. Scheibenbremse (1) nach einem der vorhergehenden Ansprüche, **dadurch gekennzeichnet, dass** der Nachstellkolben (23b) zur Nachführung mit dem Vorratskreis (46) über ein Richtungsventil (59) verbindbar ist.

6. Scheibenbremse (1) nach einem der vorhergehenden Ansprüche, **dadurch gekennzeichnet, dass** das Ausdehnungsgefäß (36) des Vorratskreises (46) der bremseninternen Hydraulikanordnung zur Erfassung eines Belagverschleißes mit einem Geber ausgerüstet ist, wobei der Geber mit einem Bremssteuergerät in Verbindung steht, welches zur Aktivierung der Nachstelleinrichtung (20) für eine entsprechende Nachführung des zumindest einen Bremsbelages (3, 3') zumindest mit dem elektromotorischen Aktuator (30) und der Steuereinheit (27) gekoppelt ist.

7. Scheibenbremse (1) nach einem der vorhergehenden Ansprüche, **dadurch gekennzeichnet, dass** die Steuereinheit (27) eine Steuerscheibe aufweist, welche von dem elektromotorischen Aktuator (30) über ein Umschaltventil (38) hydraulisch von einem Steuerantrieb (28) in Ausbildung als hydraulischer Zahnradmotor antreibbar ist.

8. Scheibenbremse (1) nach einem der vorhergehenden Ansprüche, **dadurch gekennzeichnet, dass** die Nachstelleinrichtung (20) mit einer Notlöseeinrichtung (18) versehen ist, welche mit dem Nachstellantriebsrad (17) gekoppelt ist.

9. Scheibenbremse (1) nach einem der Ansprüche 5 bis 7, **dadurch gekennzeichnet, dass** die Nachstelleinrichtung (20) zumindest einen Geber aufweist, welcher einen Nachstellweg zur Ermittlung einer aktuellen Nachführung erfasst und an das Bremssteuergerät zur Regelung der Nachstelleinrichtung (20) übermittelt.

10. Scheibenbremse (1) nach Anspruch 9, **dadurch gekennzeichnet, dass** der Geber zur Ermittlung eines Nachstellwegs ein Mehrgangpotenziometer ist, welches mit der Schraubspindel (12) direkt oder indirekt gekoppelt ist.

## Claims

1. Disc brake (1) of the self-energizing type, comprising:
a) a hydraulic system internal in the brake, which is provided with a reservoir circuit (46) and an expansion tank (36);
b) a brake application device including at least one brake application cylinder (11) for applying at least one brake lining (3, 3') in a direction towards a brake disc (1);
c) at least one power transmitter unit (7) supporting said at least one brake lining (3, 3') at a wedge angle on said brake application device;
d) at least one cylinder (21) receiving a tangential force for the change-over of the wedge angle, that comprises a differential receiver piston and which is operatively connected with said at least one power transmitter unit (7);
e) an electromotive actuator (30) that acts on said brake application device via said hydraulic system;
f) a distributor cylinder (31) for the amplification of the pressure, which comprises differential piston (32) and which is disposed in series between said electromotive actuator (30) and said brake application device; and
g) a controller unit (27) that is disposed between said cylinder receiving a tangential power (21) and said electromotive actuator (30) for control of the change-over of the wedge angle,
h) wherein said disc brake (1) comprises an adjustment device (20) for adjusting the wear on the brake lining, with said adjustment device (20) including a screw spindle (12) that is operatively connected to said adjustment device for the tracking movement of said at least one brake lining (3, 3') and which is adapted for coupling to said electromotive actuator (30) for driving,
**characterised in**
(i) that said adjustment device (20) comprises an adjustment piston (23b) that is hydraulically adjustable in said differential receiving piston (22) of said cylinder receiving a tangential power (21) in the course of the tracking movement of said at least one brake lining (3, 3').

2. Disc brake (1) according to Claim 1, **characterised in that** an adjustment driving wheel (17) interacts with a shaft driving wheel (16), which is coupled to said screw spindle (12) so as to form a hydraulic toothed-wheel motor (10) suitable for being hydraulically coupled via a hydraulic switch (44) to said electromotive actuator (30)..

3. Disc brake (1) according to Claim 1, **characterised in that** when two brake application cylinders are employed, said hydraulic toothed-wheel motor (19) is constituted by a centrally placed shaft driving wheel (16) as well as two shaft driving wheels (16) disposed on both sides, and **in that** this arrangement serves, at the same time, for synchronised adjustment of said brake application cylinders.

4. Disc brake (1) according to Claim 2, **characterised in that** said hydraulic switch (44) is controllable by said controller unit (27).

5. Disc brake (1) according to any of the preceding Claims, **characterised in that** said adjustment piston (23b) is adapted for being connected to said reservoir circuit (46), via a directional valve (59), for the tracking movement.

6. Disc brake (1) according to any of the preceding Claims, **characterised in that** said expansion tank (36) of said reservoir circuit (46) in said hydraulic system internal in the brake is provided with an emitter for the detection of the wear on the lining, wherein said emitter is in communication with a brake controller unit that is coupled at least to said electromotive actuator (30) and said controller unit (27) for activation of said adjustment device (20) for an appropriate tracking movement of said at least one brake lining (3, 3').

7. Disc brake (1) according to any of the preceding Claims, **characterised in that** said controller unit (27) comprises a control disc that is adapted for being hydraulically driven from said electromotive actuator (30) via a change-over valve (38) by a control actuator (28) in the form of a hydraulic toothed-wheel motor.

8. Disc brake (1) according to any of the preceding Claims, **characterised in that** said adjustment device (20) is provided with an emergency release means (18) that is coupled to said adjustment driving wheel (17).

9. Disc brake (1) according to any of the Claims 5 to 7, **characterised in that** said adjustment means (20) comprises at least one emitter that detects an adjustment distance for the detection of a current tracking movement and communicates it to said brake regulation device for regulation of said adjustment device (20).

10. Disc brake (1) according to Claim 9, **characterised in that** said emitter for the detection of an adjustment distance is a multi-turn potentiometer that is directly or indirectly coupled to said screw spindle (12).

## Revendications

1. Frein à disque (1) du type à auto-renforcement, comprenant:
a) un système hydraulique à un circuit réservoir (46) et à un réservoir d'expansion (36), qui est interne dans le frein ;
b) un dispositif de serrage à au moins un cylindre de serrage (11) à serrer au moins une garniture de frein (3, 3') en un sens vers un disque de frein (1) ;
c) au moins une unité de transmission de force (7), qui appuie ladite au moins une garniture de frein (3, 3') à un angle de calage audit dispositif de serrage ;
d) au moins un cylindre (21) récepteur d'une force tangentielle pour la commutation de l'angle de calage, qui comprend un piston à plots de réception et qui se trouve en connexion fonctionnelle à ladite au moins une unité de transmission de force (7) ;
e) un actionneur électromoteur (30), qui agit sur ledit dispositif de serrage via ledit système hydraulique ;
f) un cylindre distributeur (31) pour le renforcement de la pression, qui comprend un piston à plots (32) et qui est disposé, en série, entre ledit actionneur électromoteur (30) et ledit dispositif de serrage ; et
g) une unité de contrôle (27), qui est disposée entre ledit cylindre récepteur de force tangentielle (21) et ledit actionneur électromoteur (30) pour la commande de la commutation de l'angle de calage,
h) dans lequel ledit frein à disque (1) comprend un dispositif de rattrapage (20) afin de rattraper l'usure de la garniture de frein, audit dispositif de rattrapage (20) renfermant une tige filetée (12), qui se trouve en connexion fonctionnel avec ledit dispositif de rattrapage pour la poursuite de ladite au moins une garniture de frein (3, 3') et qui est apte à être accouplé audit actionneur électromoteur (30) pour l'entraînement,
caractérisé en ce
(i) que ledit dispositif de rattrapage (20) comprend un piston de rattrapage (23b), qui est hydrauliquement ajustable dans ledit piston à plots de réception (22) dudit cylindre récepteur de force tangentielle (21) au cours de la poursuite de ladite au moins une garniture de frein (3, 3').

2. Frein à disque (1) selon la revendication 1, **caractérisé en ce qu'**une roue motrice de rattrapage (17) coopère avec une roue motrice de l'arbre (16), qui est accouplée à ladite tige filetée (12), en formant un moteur à engrenages hydraulique (10), qui est apte à être accouplé hydrauliquement via un commutateur hydraulique (44) audit actionneur électromoteur (30)..

3. Frein à disque (1) selon la revendication 1, **caractérisé en ce que** quand deux cylindres de serrage sont employés, ledit moteur hydraulique à engrenages (19) est composé d'une roue motrice d'arbre (16) placée au centre ainsi que deux roues motrices d'arbre (16) placées des deux côtés, et **en ce que** cet arrangement sert, en même temps, à l'ajustement synchrone desdits cylindres de serrage.

4. Frein à disque (1) selon la revendication 2, **caractérisé en ce que** ledit commutateur hydraulique (44) est commandable par ladite unité de contrôle (27).

5. Frein à disque (1) selon une quelconque des revendications précédentes, **caractérisé en ce que** ledit piston de rattrapage (23b) est apte à être connecté audit circuit réservoir (46), via une soupape de direction (59), pour la poursuite.

6. Frein à disque (1) selon une quelconque des revendications précédentes, **caractérisé en ce que** ledit réservoir d'expansion (36) dudit circuit réservoir (46) dudit système hydraulique interne dans le frein est équipé d'un émetteur pour la détection de l'usure de la garniture, dans lequel ledit émetteur se trouve en communication avec une unité de commande de freinage, qui est accouplée au moins audit actionneur électromoteur (30) et ladite unité de contrôle (27) pour l'activation dudit dispositif de rattrapage (20) pour une poursuite appropriée de ladite au moins une garniture de frein (3, 3').

7. Frein à disque (1) selon une quelconque des revendications précédentes, **caractérisé en ce que** ladite unité de contrôle (27) comprend un disque de réglage qui est apte à être entraîné hydrauliquement à partir dudit actionneur électromoteur (30) via une soupape de commutation (38) par une unité motrice de contrôle (28) sous forme d'un moteur hydraulique à engrenages.

8. Frein à disque (1) selon une quelconque des revendications précédentes, **caractérisé en ce que** ledit dispositif de rattrapage (20) est muni d'un moyen de desserrage d'urgence (18), qui est accouplé à ladite roue motrice de rattrapage (17).

9. Frein à disque (1) selon une quelconque des revendications 5 à 7, **caractérisé en ce que** ledit moyen de rattrapage (20) comprend au moins un émetteur, qui détecte une distance de rattrapage pour la détection d'une poursuite actuelle et la communique audit dispositif régulateur de freinage pour le réglage dudit dispositif de rattrapage (20).

10. Frein à disque (1) selon la revendication 9, **caractérisé en ce que** ledit émetteur pour la détection d'une distance de rattrapage est un potentiomètre à plusieurs étages, qui est directement ou indirectement accouplé à ladite tige filetée (12).
